# EUROPÄISCHE PATENTSCHRIFT

(11) **EP 0 636 063 B1**
(45) Veröffentlichungstag und Bekanntmachung des Hinweises auf die Patenterteilung: **29.04.1998**
(21) Anmeldenummer: 94907516.2
(22) Anmeldetag: 08.02.1994
(51) Int. Cl.: B29C 47/30, D01D 4/08

(54) **VERSCHLIESSBARE AUSTRAGSDÜSE FÜR THERMOPLASTISCHE KUNSTSTOFFE**
CLOSABLE EXTRUSION NOZZLE FOR THERMOPLASTIC MATERIALS
FILIERE D'EXTRUSION OBTURABLE POUR MATIERES THERMOPLASTIQUES

(30) Priorität: 18.02.1993 DE 4305037
(43) Veröffentlichungstag der Anmeldung: 01.02.1995
(73) Patentinhaber: RIETER AUTOMATIK GmbH, D-63762 Grossostheim (DE)
(72) Erfinder: MEIDHOF, Helmut, D-63762 Gro ostheim (DE)
(74) Vertreter: Bardehle, Heinz, Dipl.-Ing.
(86) Internationale Anmeldenummer: EP9400361
(87) Internationale Veröffentlichungsnummer: WO9419169

(56) Entgegenhaltungen:
- EP-A- 0 093 358
- US-A- 3 480 995
- US-A- 3 912 439

## Beschreibung

Die Erfindung bezieht sich auf eine verschließbare Austragsdüse für thermoplastische Kunststoffe mit einer mit Düsen für den Austrag des Kunststoff aus einem Gießer versehenen Düsenplatte und einer in Stromrichtung des Kunststoffs vor der Düsenplatte angeordneten Lochplatte, deren Löcher mit den Düsen durch Verschiebung der Lochplatte gegenüber der Düsenplatte in und außer Deckung bringbar sind.

Eine derartige Austragsdüse ist aus der EP-A-0 093 358 bekannt. Dabei handelt es sich gemäß dem in der EP-A-0 093 358 dargestellten Ausführungsbeispiel um eine ebene Düsenplatte, der in Stromrichtung des Kunststoffes die Lochplatte nachgeordnet ist. Die Lochplatte wird durch Hinterschneidungen in der Düsenplatte und Federanordnungen gegen die Düsenplatte gedrückt, wodurch sich eine Abdichtung zwischen Düsenplatte und Lochplatte ergibt, wenn die Düsen mit den Löchern der Lochplatte nicht in Deckung stehen. Durch einen Verschiebemechanismus lassen sich die Düsen und die Löcher in und außer Deckung bringen, wodurch die Austragsdüse geöffnet bzw. verschlossen wird. Die in der Düsenplatte enthaltenen Hinterschneidungen sind als die Ränder der Lochplatte krallenartig umfassende Schienen ausgebildet, so daß sich gegenüber der Austrittsseite der Lochplatte Vorsprünge ergeben, durch die die Zugänglichkeit der gesamten Breite und Länge der Lochplatte beeinträchtigt wird. In der Patentschrift wird noch ohne nähere Angabe von Einzelheiten darauf hingewiesen, daß die Lochplatte auch über der Düsenplatte angeordnet sein kann. Der Erfindung liegt die Aufgabe zugrunde, die bekannte Austragsdüse dahingehend zu verbessern, daß sie eine kompaktere Bauweise aufweist, durch die eine Zugänglichkeit der Austrittsseite der Düsenplatte über deren gesamte Ausdehnung gewährleistet ist. Erfindungsgemäß geschieht dies dadurch, daß die Düsenplatte als im Querschnitt senkrecht zur Verschieberichtung U-förmiges Gehäuse für die darin eingeschlossene Lochplatte ausgebildet ist, die mit einer Dichtfläche an einem von den Düsen durchsetzten, flachen Boden des Gehäuses anliegt, wobei die Lochplatte von dem Gehäuse mindestens im Bereich von dessen Wölbungen einen Abstand einhält und die dichtende Anlage der Dichtfläche gegenüber dem Boden auf einen engen Bereich um die Düsen beschränkt ist.

Vorteilhafte Weiterbildungen der Erfindung sind in den abhängigen Ansprüchen beschrieben.

Aufgrund der Aufnahme der Lochplatte in die als U-förmiges Gehäuse ausgebildete Düsenplatte ergibt sich in günstiger Weise die Lagerung für die Lochplatte im Inneren der Düsenplatte, wodurch irgendwelche Vorsprünge zur Halterung der Lochplatte entfallen. Die Austrittsseite der Düsenplatte, also der Boden des Gehäuses, bietet sich als freie Fläche dar, die zum Beispiel zwecks Reinigung ohne weiteres von einem Messer oder dergleichen abgestrichen werden kann. Es ist auch möglich, die Austragsdüse je nach Anordnung des betreffenden Gießers schräg zu lagern, da auch schräg aus den Düsen austretende Stränge unbehindert vom Boden des Gehäuses herabfallen können.

Um eine gute Abdichtung zwischen Dichtflächen der Lochplatte und dem Boden des Gehäuses zu gewährleisten, gibt man zweckmäßig der Dichtfläche der Lochplatte quer zu ihrer Verschieberichtung eine schwache Wölbung, der sich der Boden des Gehäuses unter Spannung anpaßt. Der Boden des Gehäuses wird dann bei montierter Austragsdüse ebenfalls schwach gewölbt, wobei er sich satt um die Wölbung der Lochplatte legt und damit zu einer guten Abdichtung führt.

Um die Aufnahme der Lochplatte im Gehäuse konstruktiv günstig zu gestalten wird die Austragsdüse so ausgeführt, daß das Gehäuse mit von seinen Wänden abstehenden Flanschen an eine am Gießer ansetzende, ebene durchbrochene Grundplatte angeschraubt ist und die Lochplatte zwischen Grundplatte und Boden des Gehäuses derart eingepaßt ist, daß unter federnder Anlage des Bodens an die Dichtfläche der Lochplatte die Verschiebbarkeit der Lochplatte gewährleistet ist.

Aufgrund dieser Gestaltung ergibt sich ein durch die Grundplatte und den Innenraum des Gehäuses definierter Raum, in den die Lochplatte eingepaßt werden kann und die dann vom an die Grundplatte angeschraubten Gehäuse einerseits gegen die Grundplatte und andererseits gegen den Boden des Gehäuses gedrückt wird, wobei durch die Einpassung dafür gesorgt werden kann, daß die Verschiebbarkeit der Lochplatte gewährleistet bleibt.

In den Figuren sind Ausführungsbeispiele der Erfindung dargestellt. Es zeigt:
- Fig. 1: einen Schnitt durch die Austragsdüse mit zwei Reihen von Düsen (in perspektifischer Sicht),
- Fig. 2: einen Ausschnitt aus der Anordnung gemäß Fig. 1, und zwar eine Lochplatte mit schwacher Wölbung gegenüber dem Boden des in Fig. 2 nicht dargestellten Gehäuses.

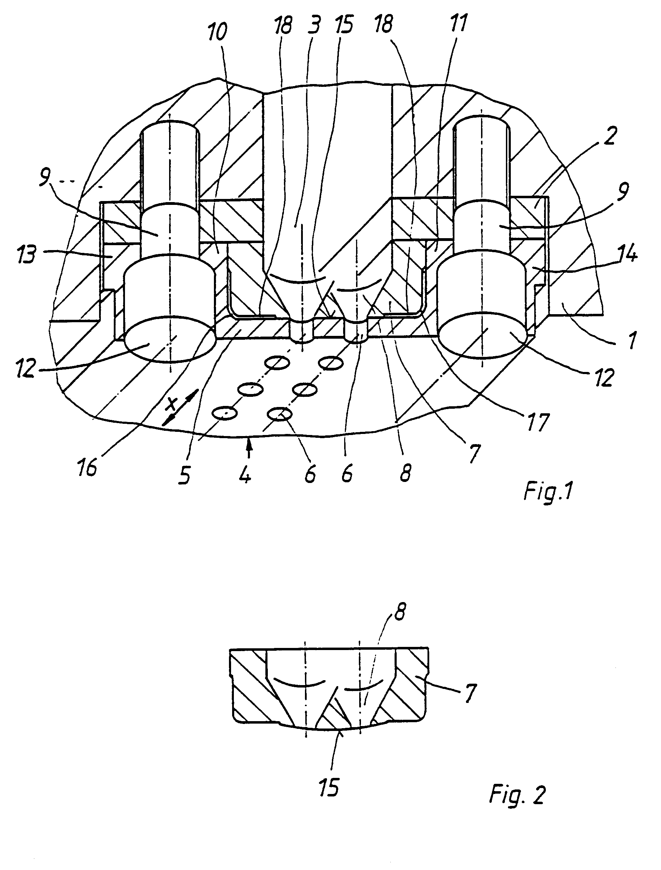

Figur 1 zeigt in ausschnittsweiser Darstellung den Gießer 1 eines Behälters für flüssigen thermoplastischen Kunststoff, der von einer Grundplatte 2 abgeschlossen wird. Die Grundplatte 2 ist mit dem Durchbruch 3 für den Durchtritt von Kunststoff versehen. An die Grundplatte 2 ist die Düsenplatte 4 angesetzt, die im Querschnitt U-förmig ausgestaltet ist. Sie bildet damit ein Gehäuse mit den Wänden 10 und 11 und dem diesen verbindenden Boden 5. In den Innenraum zwischen den Wänden 10 und 11, dem Boden 5 und der Grundplatte 2 ist die Lochplatte 7 eingesetzt, die mittels eines nicht dargestellten Verschiebemechanismus in Längsrichtung der Düsenplatte 4, also parallel zu den Wänden 10 und 11 verschiebbar angeordnet ist. Die Erstreckungsrichtung der Düsenplatte 4 geht aus der in Fig.1 mit eingezeichneten perspektivischen Darstellung hervor. Zusammengehalten wird die Anordnung durch die Schrauben 9, die in den Gießer 1 eingeschraubt sind und die mit ihren Schraubenköpfen 12 die Flansche 13 und 14 der Düsenplatte 4 gegen die Grundplatte 2 pressen. Dabei wird die Lochplatte 7 so eingeschlossen, daß sie mit ihrer Dichtfläche 15 gegen die gegenüberliegende Fläche des Bodens 5 der Düsenplatte 4, drückt.

Für dieses Einschließen der Lochplatte 7 kommt es also auf den Abstand zwischen der Bodenplatte 5 und der Grundplatte 2 an, der so gestaltet ist, daß die entsprechend eingepaßte Lochplatte 7 unter satter Anlage ihrer Dichtfläche 15 an der Bodenplatte 5 in der Düsenplatte 4 verschiebbar bleibt. Um dabei die erforderliche Spannung innerhalb der Düsenplatte 4 aufrecht zu erhalten, weist die Lochplatte 7 im Bereich von Wölbungen 16, 17 der Düsenplatte 4 einen Abstand auf, der in Fig. 1 mit dem Bezugszeichen 18 bezeichnet ist. Durch diesen Abstand wird gewährleistet, daß sich der Boden 5 der Düsenplatte 4 gewissermaßen gegenüber den Wänden 10 und 11 leicht an die Lochplatte heranbiegen läßt, wenn die Dicke der Lochplatte 7 dies erfordert.

Die Düsenplatte 4 ist im Bereich ihres Bodens 5 mit den Düsen 6 versehen, die mit entsprechenden Löchern 8 in der Lochplatte 7 in der dargestellten Betriebslage fluchten. In diesem Falle kann also aus dem Gießer 1 flüssiger Kunststoff durch den Durchbruch 3, die Löcher 7 und die Düsen 6 nach außen austreten. Durch Verschieben der Lochplatte 7 in ihrer Längsrichtung (Doppelpfeiler) lassen sich die Löcher 8 mit den Düsen 6 außer Deckung bringen, womit die Anordnung in die Außerbetriebslage gebracht ist.

Figur 2 zeigt eine Lochplatte 7 mit ihren Löchern 8, bei der die Dichtfläche 15 leicht gewölbt ausgebildet ist. Diese Wölbung ist in Figur 2 überhöht dargestellt. Es handelt sich dabei um Höhenunterschiede in der Größenordnung von unter 1/10 mm. Aufgrund dieser leichten Wölbung muß sich bei der Montage der Vorrichtung der in Figur 2 nicht dargestellte Boden der Düsenplatte (Bezugszeichen 5 in Figur 1) an die Wölbung der Dichtfläche 15 anpassen, womit sich eine besonders sichere Dichtwirkung in diesem Bereich ergibt. Auf jeden Fall werden damit verbleibende Spalten zwischen Boden 5 und Lochplatte 7 die zu Undichtigkeit führen, mit Sicherheit vermieden.

## Patentansprüche

1. Verschließbare Austragsdüse für thermoplastische Kunststoffe mit einer mit Düsen (6) für den Austrag des Kunststoffes aus einem Gießer (1) versehenen Düsenplatte (4) und einer in Stromrichtung des Kunststoffs vor der Düsenplatte (4) angeordneten Lochplatte (7), deren Löcher (8) mit den Düsen (6) durch Verschiebung der Lochplatte (7) gegenüber der Düsenplatte (4) in und außer Deckung bringbar sind, **dadurch gekennzeichnet**, daß die Düsenplatte (4) als im Querschnitt senkrecht zur Verschieberichtung U-förmiges Gehäuse (5,10,11) für die darin eingeschlossene Lochplatte (7) ausgebildet ist, die mit einer Dichtfläche (15) ein an einem von den Düsen (6) durchsetzten, flachen Boden (5) des Gehäuses (5,10,11) anliegt, wobei die Lochplatte (7) von dem Gehäuse (5,10,11) mindestens im Bereich von dessen Wölbungen (16,17) einen Abstand (18) einhält und die dichtende Anlage der Dichtfläche (15) gegenüber dem Boden (5) auf einen engen Bereich um die Düsen (6) beschränkt ist.

2. Austragsdüse nach Anspruch 1, **dadurch gekennzeichnet**, daß die Dichtfläche (15) der Lochplatte (7) quer zu ihrer Verschieberichtung eine schwache Wölbung aufweist, der sich der Boden (5) des Gehäuses (5,10,11) unter Spannung anpaßt.

3. Austragsdüse nach Anspruch 1 oder 2, **dadurch gekennzeichnet**, daß das Gehäuse (5,10,11) mit von seinen Wänden (10,11) abstehenden Flanschen an eine am Gießer (1) ansetzende, ebene durchbrochene Grundplatte (2) angeschraubt ist und die Lochplatte (7) zwischen Grundplatte (2) und Boden (5) des Gehäuses (5,10,11) derart eingepaßt ist, daß unter federnder Anlage des Bodens (5) an die Dichtfläche (15) der Lochplatte (7) die Verschiebbarkeit der Lochplatte (7) gewährleistet ist.

## Claims

1. A closable extrusion nozzle for thermoplastic materials with a nozzle plate (4) containing nozzles (6) that permit extrusion of the plastic material from a hopper (1), and with a perforated plate (7) arranged upstream of the nozzle plate (4), whose apertures (8) can be brought in and out of alignment with the nozzles (6) by displacing the perforated plate (7) relative to the nozzle plate (4), **characterized by** the nozzle plate (4) that is designed as a housing (5,10,11) with a U-shaped cross section perpendicular to the sliding direction of the enclosed perforated plate (7) that rests with a sealing surface (15) against the flat bottom (5) of the housing (5,10,11) in which the nozzles (6) are located, wherein a gap (18) is provided between the perforated plate (7) and the housing (5,10,11) at least in the curved areas (16,17), and wherein the sealing surface (15) that faces the bottom (5) is restricted to a narrow area around the nozzles (6).

2. An extrusion nozzle under claim 1, **characterized by** the sealing surface (15) of the perforated plate (7) having perpendicularly to its sliding direction a slightly convex shape, to which the bottom (5) of the housing (5,10,11) adjusts under load.

3. An extrusion nozzle under claim 1 or 2, **characterized by** the housing (5,10,11) with flanges that project from the walls (10,11) and that are bolted to a flat base plate (2) with a perforated plate (7) that is fitted between the base plate (2) and the bottom (5) of the housing (5,10,11) such that the contact of the bottom (5) with the sealing surfaces (15) of the perforated plate (7) is elastic and ensures that the perforated plate (7) can slide.

## Revendications

1. Filière obturable de sortie pour matières thermoplastiques, avec une plaque porte-filières (4) pourvue de filières (6) pour la sortie de la matière. plastique à partir d'un verseur (1), et une plaque perforée (7) disposée avant la plaque porte-filières (4) dans le sens de l'écoulement de la matière plastique et dont les trous (8) peuvent être amenés à recouvrir et à découvrir les filières (6) par un déplacement de la plaque perforée (7) par rapport à la plaque porte-filières (4), **caractérisée en ce que** la plaque porte-filières (4) est réalisée sous la forme d'un carter (5, 10, 11), à section transversale en forme de U perpendiculairement au sens de déplacement, pour la plaque perforée (7) logée à l'intérieur et qui est appliquée, par une surface d'étanchéité (15) contre un fond (5), plat et traversé par les filières (6), du carter (5, 10, 11), la plaque perforée (7) conservant un écartement (18) par rapport au carte (5, 10, 11) au moins dans la zone des courbures (16, 17) de celui-ci et le contact étroit de la surface d'étanchéité (15) contre le fond (5) étant limité à une zone étroite autour des filières (6).

2. Filière de sortie selon la revendication 1, **caractérisée en ce que** la surface d'étanchéité (15) de la plaque perforée (7) présente, transversalement à son sens de déplacement, une faible courbure qui s'adapte sous une tension au fond (5) du carter (5, 10, 11).

3. Filière de sortie selon la revendication 1 ou 2, **caractérisée en ce que** le carter (5, 10, 11) est vissé au moyen de ses rebords, dépassant de ses parois (10, 11), contre une plaque de base (2), plate et évidée, en applique contre le verseur (1), et en ce que la plaque perforée (7) est insérée de telle manière entre la plaque de base (2) et le fond (5) du carter (5, 10, 11) que soit assurée la mobilité de la plaque perforée (7) du fait de l'application élastique du fond (5) contre la surface d'étanchéité (15) de la plaque perforée (7).
